Europäisches Patentamt

European Patent Office

Office européen des brevets

(11) Numéro de publication : **0 447 279 A2**

# (12) DEMANDE DE BREVET EUROPEEN

(21) Numéro de dépôt : 91400423.9

(22) Date de dépôt : 18.02.91

(51) Int. Cl.⁵ : **G01L 1/04, G01L 1/22, G01L 5/00**

(30) Priorité : 20.02.90 FR 9002034

(43) Date de publication de la demande :
**18.09.91 Bulletin 91/38**

(84) Etats contractants désignés :
**AT BE CH DE DK ES GB GR IT LI LU NL SE**

(71) Demandeur : FREYSSINET INTERNATIONAL
(STUP)
52-54 rue de la Belle Feuille
F-92100 Boulogne-Billancourt (FR)

(72) Inventeur : **de la Fuente, Carlos**
**17, rue du Sergent Bobillot**
**F-92000 Nanterre (FR)**

(74) Mandataire : **Behaghel, Pierre et al**
**CABINET PLASSERAUD 84 rue d'Amsterdam**
**F-75009 Paris (FR)**

(54) **Perfectionnements aux dispositifs de mesure de charges.**

(57)    Pour mesurer une charge (P), on a recours à un dispositif comprenant, dans un boîtier plat (6), une pastille cylindrique de révolution (10) en matériau élastomère, une bague métallique (11) entourant jointivement cette pastille et une jauge électrique de contrainte (13) collée contre la face extérieure de la bague, ladite jauge étant associée à des moyens (14) pour mesurer la contrainte exercée sur la bague, contrainte qui est liée à la poussée (p) appliquée axialement sur la pastille par la charge (P) à mesurer, le boîtier étant conformé de façon telle que l'une des faces planes de la pastille demeure accessible pour l'application sur elle d'une poussée extérieure (p) et que la bague et la pastille puissent subir de légères déformations radiales.

FIG.1.

EP 0 447 279 A2

# PERFECTIONNEMENTS AUX DISPOSITIFS DE MESURE DE CHARGES

L'invention concerne des dispositifs pour mesurer des charges élevées et en particulier celles exercées sur leurs appuis par les ouvrages d'art ou leurs composants tels que haubans ou câbles de précontrainte.

Il est connu d'interposer entre les ouvrages supportés et leurs embases de support des appuis en élastomère fretté, c'est-à-dire composés par un empilage de feuillets en élastomère et de plaques métalliques appelées frettes.

Lorsque l'une au moins des frettes présente une épaisseur suffisante, on a déjà proposé, en vue de mesurer la charge exercée par un ouvrage du genre ci-dessus sur son appui ainsi fretté, de coller sur la tranche apparente de ladite frette une jauge de contrainte (brevet AT-389 171).

La résistance électrique de cette jauge varie alors en fonction du degré d'écrasement de la frette, lequel est lié à la contrainte engendrée dans cette frette, c'est-à-dire à la charge à mesurer.

Les variations de cette résistance peuvent être facilement connues en mesurant les variations d'un courant électrique qui la traverse et il suffit d'étalonner l'ensemble sous presse pour disposer ainsi d'un moyen de mesure de la charge en question.

Les jauges utilisées sont en général fiables et économiques, mais le procédé décrit présente un certain nombre d'inconvénients tels que les suivants :

– la sensibilité de la mesure est réduite en raison de la petitesse des variations dimensionnelles des frettes mises sous charge ainsi que, par conséquent, des variations de résistance électrique à exploiter,

– le montage des jauges sur les tranches des frettes est fragile et précaire.

L'invention permet de bénéficier des avantages ci-dessus rappelés des jauges tout en écartant les inconvénients signalés.

A cet effet les dispositifs de mesure de charge du genre en question selon l'invention sont essentiellement caractérisés en ce qu'ils comprennent une pastille cylindrique de révolution en matériau élastomère, une bague métallique entourant jointivement cette pastille et au moins une jauge électrique de contrainte collée contre la face extérieure de la bague, jauge associée à des moyens pour mesurer la contrainte exercée sur la bague, contrainte qui est proportionnelle à la poussée appliquée axialement sur la pastille par la charge à mesurer.

Dans des modes de réalisation préférés, on a recours en outre à l'une et/ou à l'autre des dispositions suivantes :

– la pastille ceinturée par la bague elle-même revêtue de la jauge est contenue dans un boîtier plat conformé de façon telle que l'une des faces planes de la pastille demeure accessible pour l'application sur elle d'une poussée extérieure et que la bague et la pastille puissent subir de légères déformations radiales,

– la bague est interposée axialement dans le boîtier plat entre le fond et une collerette rentrante de ce boîtier, collerette dont la face extérieure plane prolonge radialement vers l'extérieur la face exposée de la pastille,

– la collerette est vissée dans le boîtier,

– le fond du boîtier est vissé dans sa paroi latérale ou dans un anneau prolongeant cette paroi,

– le boîtier contient, en plus de la jauge de contrainte rapportée sur la face extérieure de la bague, une jauge de contrainte témoin et des moyens comparateurs associés aux deux jauges sont prévus pour éliminer de la mesure de contrainte les erreurs engendrées par les paramètres (température, humidité...) autres que la contrainte elle-même,

– le dispositif sert à mesurer une forte charge appliquée sur une plaque de support par l'intermédiaire d'un appui en élastomère, notamment fretté, et le boîtier est logé dans un alvéole de forme complémentaire évidé dans la plaque de façon telle que la face exposée de la pastille et la face d'appui de la plaque soient affleurées,

– le fond de l'alvéole selon l'alinéa précédent est constitué par un bouchon vissé à partir de la face opposée de la plaque dans un alésage fileté prolongeant axialement ledit alvéole,

– le dispositif de mesure, permettant de mesurer la charge appliquée en un point donné d'un appui donné, est associé à au moins un autre dispositif identique affecté à la mesure de la charge appliquée en un autre point du même appui,

– trois dispositifs de mesure associés selon l'alinéa précédent sont disposés respectivement aux trois sommets d'un triangle équilatéral inscrit à l'intérieur du pourtour horizontal de l'appui, à une petite distance de son bord.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1 de ce dessin montre en coupe verticale partielle un dispositif établi selon l'invention et servant à mesurer une charge appliquée sur une plaque de support par l'intermédiaire d'un appui en élastomère fretté.

La figure 2 montre en vue perspective un élément essentiel de ce dispositif.

La figure 3 montre schématiquement les emplacements qui peuvent être occupés par trois dispositifs de mesure du genre ci-dessus dans le cas où l'appui en élastomère présente un contour horizontal carré.

La figure 4 montre à échelle agrandie et en coupe verticale partielle une variante du dispositif de la figure 1, également conforme à l'invention.

Dans le mode de réalisation adopté à titre d'exemple, on se propose de mesurer la forte charge P qui est appliquée par un élément de pont ou autre ouvrage d'art sur une embase de support 1 par l'intermédiaire d'un appui 2 en élastomère fretté, c'est-à-dire composé par un empilage alterné de feuillets ou couches 3 en élastomère et de tôles ou frettes métalliques 4, cet appui étant délimité inférieurement par l'un de ses feuillets $3_0$ qui repose directement sur l'embase 1.

La face supérieure de l'embase est évidée par un alvéole 5 délimité par un fond plat et par une surface latérale cylindrique de révolution.

Dans cet alvéole 5 est logée jointivement une capsule dynamométrique comprenant :
- un boîtier plat 6 dont la forme extérieure est complémentaire de celle de l'alvéole de façon à pouvoir être logé jointivement dans cet alvéole, boîtier délimité par un fond plat circulaire 7, une paroi latérale cylindrique de révolution 8 prolongeant vers le haut le bord de ce fond 7 et une collerette annulaire 9 prolongeant vers le centre le bord supérieur de la paroi 8 et délimitant en son centre un orifice circulaire,
- une pastille pleine 10 en élastomère présentant la forme générale d'un cylindre de révolution posé sur le fond 7 du boîtier et dont la portion supérieure est encerclée jointivement par la collerette 9,
- une bague métallique ou analogue 11 encerclant jointivement toute la portion de la pastille 10 située au-dessous de la collerette 9, ladite bague présentant une épaisseur radiale inférieure à celle de cette collerette de façon à réserver autour d'elle, à l'intérieur du boîtier, une chambre annulaire 12,
- et une jauge électrique de contrainte 13 collée sur la surface extérieure de la bague 11, à l'intérieur de la chambre 12.

La face plane supérieure de la pastille 10 affleure à la surface plane supérieure du boîtier et est juxtaposée sur toute son étendue contre la face inférieure de la couche $3_0$, soit directement, soit avec interposition d'une mince pellicule présentant un faible coefficient de frottement vis-à-vis des élastomères concernés.

L'élastomère constitutif de la pastille 10 est de préférence le même que celui constitutif de la couche $3_0$ ou tout au moins présente une dureté voisine de celle de ce dernier, dureté généralement comprise entre 45 et 75 degrés Shore A.

Le matériau constitutif de la bague 11 doit être résistant au fluage (allongement sous charge constante) et déformable élastiquement sous charge variable : il s'agit en général d'un acier allié et traité de façon appropriée ou d'un alliage d'aluminium ou d'un bronze ou encore de l'une des matières plastiques dites "techniques" présentant des caractéristiques comparables.

La totalité de la face supérieure de la pastille 10 est directement soumise à la poussée verticale p engendrée par l'application de la charge P sur l'appui 2.

La pastille 10 en élastomère se comporte comme une masse liquide en ce sens que son volume demeure constant, mais est déformable : la poussée verticale p, qui écrase verticalement cette pastille, dilate donc celle-ci radialement selon des forces horizontales r qui sont appliquées radialement contre la face intérieure de la bague 11, ce qui tend à agrandir cette bague en l'allongeant circonférentiellement.

Ce sont précisément ces allongements qui sont détectés par la jauge 13 et exploités dans un appareil 14 propre à mesurer la poussée p, les allongements considérés étant proportionnels à cette poussée.

Ledit appareil 14 est lui-même associé à des dispositifs d'affichage, d'enregistrement et/ou d'exploitation appropriés.

Il est en outre étalonné préalablement de façon telle que les mesures de résistance effectuées par lui soient directement converties en valeurs de la charge P sur l'appui exprimées en kN.

Pour compenser les erreurs susceptibles d'être introduites dans la mesure par des phénomènes autres que la déformation à mesurer, phénomènes tels que les variations de la température ou de l'humidité appliquée sur la jauge 13, on dispose avantageusement dans la chambre annulaire 12 une seconde jauge 15 en tous points identiques à la jauge 13, mains non collée sur la face extérieure de la bague 11, et on associe cette seconde jauge 15 à la première 13 dans un dispositif comparateur susceptible de neutraliser automatiquement par différence toutes lesdites causes d'erreurs.

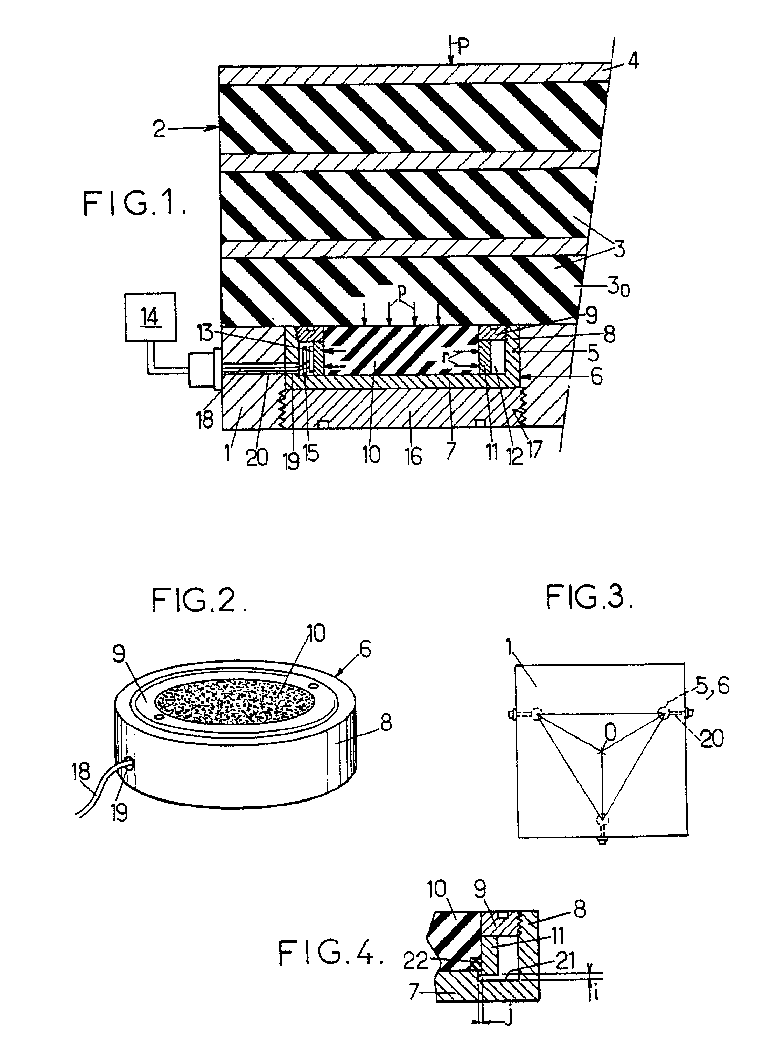

Dans les modes de réalisation plus particulièrement illustrés sur la figure 1,
- la collerette 9 est filetée extérieurement et vissée dans la partie haute de la paroi latérale 8 du boîtier 6 : cette construction permet d'appliquer fermement la bague 11 entre la collerette 9 et le fond 7 du boîtier, ce qui empêche toute "fuite" du matériau élastomère constitutif de la pastille 10 entre ces différentes pièces

3

lors de la compression axiale de ladite pastille,

– le fond de l'alvéole 5 est lui-même constitué par un bouchon plat 16 vissé dans un alésage complémentaire 17 lui-même évidé dans l'embase 1 dans le prolongement axial inférieur dudit alvéole : cette construction permet d'appliquer fermement l'ensemble du boîtier 6 et de son contenu vers le haut, ce qui permet d'obtenir une juxtaposition parfaite entre les deux faces planes en regard de la pastille 10 et de la couche inférieure $3_0$ de l'appui 2.

– les fils électriques 18 qui desservent la jauge 13 et éventuellement la jauge 15 si l'en est prévu une traversent des alésages 19 et 20 évidés respectivement dans le boîtier 6 et dans l'embase 1.

Au lieu d'être formé d'un seul bloc avec la paroi latérale 8, le fond 7 pourrait être vissé ou serti sur cette paroi ou sur un anneau prolongeant radialement vers le centre une extrémité de cette paroi.

Au lieu d'être unique, la jauge 13 pourrait être associée à au moins une autre jauge collée comme la première sur la face extérieure de la bague 11, les résistances des différentes jauges étant montées de façon par exemple à compenser automatiquement leurs dérives dans le temps, le montage en question étant par exemple celui d'un pont de Wheatstone si le nombre des jauges considérées est de quatre.

L'alésage 20 peut être horizontal et relativement court si le boîtier 6 est situé à proximité d'une face latérale de l'embase 1.

C'est l'hypothèse qui a été envisagée sur la figure 3.

Selon cette hypothèse, le contour général de l'embase 1 est carré et l'on a équipé cette embase de trois capsules dynamométriques 6 selon l'invention disposées respectivement aux trois sommets d'un triangle équilatéral dont le centre de gravité O se trouve au centre dudit carré.

Une telle configuration permet non seulement de mesurer la poussée p appliquée localement par l'appui 2 en un point de son embase, mais également les différences entre les valeurs de cette poussée p appliquées en des points différents de ladite embase, ce qui permet d'en déduire les différences d'écrasement de l'appui 2 en ces différents points et donc l'inclinaison qui en résulte de la charge.

La connaissance d'une telle inclinaison peut être extrêmement précieuse dans certains cas : elle peut en particulier guider le constructeur pour renforcer localement le supportage de la charge et/ou modifier la répartition de cette charge.

Pour faciliter les déformations radiales de la bague 11, il peut être avantageux de traiter l'une au moins des faces en regard de cette bague, du fond 7 et de la collerette 9 de façon à réduire leur coefficient de frottement mutuel, notamment en la revêtant d'une pellicule de polytétrafluoroéthylène ou encore d'interposer une rondelle de ce matériau entre les faces considérées.

Une telle mesure analogue (revêtement ou interposition d'un disque) peut également être étendue à la surface, du fond 7, sur laquelle repose la pastille 10, pour réduire l'adhérence entre cette pastille et ce fond et faciliter les déformations radiales de ladite pastille.

Le traitement de revêtement ci-dessus peut également être étendu à l'ensemble du boîtier aux fins d'amélioration de sa protection contre la corrosion.

Une autre manière avantageuse de faciliter les déformations radiales de la bague 11 consiste à éviter tout serrage axial entre cette bague et les deux pièces (fond 7 et collerette 9) qui l'encadrent axialement.

A cet effet par exemple on réserve dans le pourtour du fond 7 une rigole annulaire 21 (figure 4) en regard de la bague 11, rigole dont le fond est séparé axialement par un petit jeu i de ladite bague et dont le bord interne, cylindrique, pénètre dans la bague avec interposition d'un très petit jeu radial j.

De la sorte les déformations radiales de la bague 11, avantageusement adhérée par vulcanisation sur la pastille 10 qu'elle ceinture, ne font intervenir aucun frottement entre cette bague 11 et le fond 7.

Pour empêcher toute expansion ou "fuite" du matériau élastomère constitutif de la pastille 10 à travers l'espace annulaire définissant le jeu j, on insère avantageusement dans cette pastille, lors de son moulage, un jonc d'étanchéité annulaire 22 de section carrée localisé au niveau dudit espace.

Dans des modes de réalisation ayant donné toute satisfaction et mentionnés ici seulement à titre illustratif et bien entendu aucunement limitatif, les cellules, affectées à des mesures de poussée p comprises entre 15 et 100 MPa, présentaient les dimensions suivantes :

```
– diamètre extérieur du boîtier 6 :        30 à 35 mm
– hauteur axiale de ce boîtier :            9 à 15 mm
– épaisseur de la bague 11 :              0,5 à  3 mm
– hauteur axiale de cette bague :               5 mm
```

et les contraintes de traction mesurées par la jauge 13 étaient comprises entre 150 et 350 Mpa.

En suite de quoi et quel que soit le mode de réalisation adopté, on dispose finalement d'un dispositif de mesure de charge dont la constitution et le fonctionnement résultent suffisamment de ce qui précède.

Ce dispositif présente de nombreux avantages par rapport à ceux antérieurement connus, en particulier en ce qui concerne la simplicité, la robustesse, la fiabilité et la sécurité.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif de mesure de charge, caractérisé en ce qu'il comprend une pastille cylindrique de révolution (10) en matériau élastomère, une bague métallique (11) entourant jointivement cette pastille et au moins une jauge électrique de contrainte (13) collée contre la face extérieure de la bague, jauge associée à des moyens (14) pour mesurer la contrainte exercée sur la bague, contrainte qui est proportionnelle à la poussée (p) appliquée axialement sur la pastille par la charge (P) à mesurer.

2. Dispositif de mesure selon la revendication 1, caractérisé en ce que la pastille (10) ceinturée par la bague (11) elle-même revêtue de la jauge (13) est contenue dans un boîtier plat (6) conformé de façon telle que l'une des faces planes de la pastille demeure accessible pour l'application sur elle d'une poussée extérieure (p) et que la bague et la pastille puissent subir de légères déformations radiales.

3. Dispositif de mesure selon la revendication 2, caractérisé en ce que la bague (2) est interposée axialement dans le boîtier plat (6) entre le fond (7) et une collerette rentrante (9) de ce boîtier, collerette dont la face extérieure plane prolonge radialement vers l'extérieur la face exposée de la pastille

4. Dispositif de mesure selon la revendication 3, caractérisé en ce que la collerette (9) est vissée dans le boîtier (6).

5. Dispositif de mesure selon l'une quelconque des revendications 3 et 4, caractérisé en ce que le fond (7) du boîtier et vissé dans la paroi latérale (8) de ce boîtier ou dans un anneau prolongeant cette paroi.

6. Dispositif de mesure selon l'une quelconque des revendications 3 à 5, caractérisé en ce que l'une au moins des faces transversales en regard de la bague (11), du fond (7) et de la collerette (9) est traitée de façon à réduire leur coefficient de frottement mutuel.

7. Dispositif de mesure selon l'une quelconque des revendications 3 à 6, caractérisé en ce qu'un jeu axial (i) est réservé entre la bague (11) et l'une au moins des deux surfaces (7,9) disposées axialement en regard de cette bague.

8. Dispositif de mesure selon l'une quelconque des revendications 2 à 7, caractérisé en ce que le boîtier (6) contient, en plus de la jauge de contrainte (13) rapportée sur la face extérieure de la bague (11), une jauge de contrainte témoin (15) et en ce que des moyens comparateurs associés aux deux jauges sont prévus pour éliminer de la mesure de contrainte les erreurs engendrées par les paramètres (température, humidité...) autres que la contrainte elle-même.

9. Dispositif de mesure selon l'une quelconque des précédentes revendications, servant à mesurer une forte charge (P) appliquée sur une plaque de support (1) par l'intermédiaire d'un appui (2) en élastomère, notamment fretté, caractérisé en ce que le boîtier (6) est logé dans un alvéole (5) de forme complémentaire évidé dans la plaque de façon telle que la face exposée de la pastille (10) et la face d'appui de la plaque soient affleurées.

10. Dispositif de mesure selon la revendication 9, caractérisé en ce que le fond de l'alvéole (5) est constitué par un bouchon (16) vissé à partir de la face opposée de la plaque (1) dans un alésage fileté (17) prolongeant axialement ledit alvéole.

11. Dispositif de mesure selon l'une quelconque des précédentes revendications, permettant de mesurer la charge (p) appliquée en un point donné d'une embase (1), caractérisé en ce qu'il est associé à au moins un autre dispositif identique affecté à la mesure de la charge (p) appliquée en un autre point de la même embase (1).

12. Ensemble de mesure d'une charge (P), caractérisé en ce qu'il comprend trois dispositifs de mesure associés selon la revendication 11 et disposés respectivement aux trois sommets d'un triangle équilatéral inscrit à l'intérieur du pourtour horizontal de l'embase, à une petite distance de son bord (figure 3).

FIG.1.

FIG.2.

FIG.3.

FIG.4.